# EUROPEAN PATENT APPLICATION

(11) **EP 2 120 422 A1**
(43) Date of publication of application: **18.11.2009**
(21) Application number: 08720979.7
(22) Date of filing: 28.02.2008
(51) Int. Cl.: H04M 1/00, H04R 1/10, H04R 5/033

(54) **RELAY DEVICE**

(30) Priority: 07.03.2007 JP 2007057851
(71) Applicant: Sony Corporation, Tokyo 108-0075 (JP)
(72) Inventor: YOSHINO, Yoshitaka, Tokyo 108-0075 (JP); MUKAI, Koichi, Tokyo 141-0032 (JP); KOMORI, Chisato, Tokyo 141-0032 (JP)
(74) Representative: Müller - Hoffmann & Partner
(86) International application number: PCT/JP2008/053484
(87) International publication number: WO 2008/108261

(57) **Abstract**

There is provided a relay unit disposed between a mobile terminal that is a sound source and an earphone for outputting sound. The relay unit preferably wirelessly transmits/receives audio data to/from the mobile terminal and preferably transmits an operation signal to the mobile terminal.

A headset is attached to the relay unit. The headset can be used as a wireless headset through Bluetooth communication with the mobile terminal. On the other hand, when the mobile terminal receives a digital mobile broadcast, the relay unit is connected to the mobile terminal via a shielded cable that also operates as a broadcast receiving antenna. Furthermore, while the relay unit is connected to the mobile terminal via a cable, a circuit driving battery included in the relay unit is charged.

## Description

### Technical Field

The present invention relates to relay apparatuses disposed between an information apparatus such as a mobile telephone that is a source of music data or audio data and an earphone for outputting sound, and, more particularly, to a relay apparatus for transmitting/receiving music data or audio data to/from a mobile terminal having a radio frequency communication function and transmitting an operation signal to the mobile terminal.

More specifically, the present invention relates to relay apparatuses disposed between a mobile terminal capable of receiving digital mobile broadcasts such as a digital radio broadcast and an One-Seg broadcast and an earphone for outputting sound, and, more particularly, to a relay apparatus for providing an antenna function when a mobile terminal receives a digital mobile broadcast.

### Background Art

Various mobile terminals such as a mobile telephone and a portable audio player are widely used. Users of mobile terminals for receiving an audio signal or reproducing a recorded audio signal generally wear a headset so as to listen to and view sound. With the current expansion of services for mobile terminals, for example, digital mobile broadcasting, the number of mobile terminal usage patterns using a headset is thought to be increased. Such digital mobile broadcasting includes ISDB-Tsb (Integrated Services Digital Broadcasting for Terrestrial Sound Broadcasting) and One Seg. ISDB-Tsb is digital terrestrial sound broadcasting (digital radio broadcasting) using a VHF band (eight broadcast stations individually use segments of 430 kHz obtained by dividing 4 MHz of 7 ch (having a desired wave band of 188.5 MHz to 192 MHz) that is an unused channel between 6 ch and 8 ch for analog terrestrial TV broadcasting). In One-Seg broadcasting, a single segment that is the middle segment of thirteen segments obtained by dividing a band of 6 MHz for digital terrestrial TV broadcasting is used.

Here, if a mobile terminal and a headset are connected to each other via a cable, the body or luggage of a user who is moving or doing something is tangled in the cable. This is inconvenience for the user. For this reason, a system for wirelessly connecting a terminal such as a wireless audio player and a headset to each other has been developed, and is widely used.

For example, the wireless audio player codes music data read out from a recording medium as appropriate, adds a header compliant with a predetermined radio frequency communication protocol to the music data, performs modulation processing upon the music data, upconverts the music data into a desired wireless signal, and outputs the wireless signal into the air. On the other hand, the wireless headset receives the wireless signal, performs appropriate demodulation processing and appropriate decoding processing upon the wireless signal so as to obtain a music signal, and outputs the music signal as sound from a speaker. Furthermore, since the headset includes a relay unit provided with a remote controller operation portion that is used by a user to instruct the wireless audio player to reproduce or stop music data, an operation signal is similarly wirelessly transmitted from the relay unit to the wireless audio player.

For example, a near field communication technique such as a Bluetooth communication technique is used for the wireless connection between the mobile terminal and the headset. In Bluetooth communication, a global radio frequency called an ISM (Industry Science Medical) band of 2.4 GHz is used and an entire data transmission rate is 1 Mbps. Bluetooth is a global standard for providing a wireless connection interface applicable to various industries, and is operated and managed by the "Bluetooth SIG (Special Interest Group)".

For example, an ear-hook wireless headset for wirelessly achieving a comfortable hands-free mobile telephone call using Bluetooth communication has been proposed (see, for example, Patent Document 1). The body of the headset includes a circuit board functioning as a Bluetooth transmission/reception apparatus, an antenna disposed on the circuit board, and a rechargeable battery.

Since a headset unit having a radio frequency function is driven by a battery, it is required to charge or replace the battery. This is inconvenience for users. Furthermore, when the battery becomes exhausted, it is impossible to receive, reproduce, and output an audio signal and transmit an operation signal. That is, it is impossible to use the headset.

For example, a headset having a radio frequency communication function has been proposed (see, for example, Patent Document 2). The headset disconnects a wireless connection and stops the operation thereof when detecting the connection of a power cable thereto so as to achieve the stable charging operation of a battery.

Furthermore, a wireless system for supplying a part of an operation voltage for a wireless audio player as a charging voltage for a secondary battery included in a wireless headphone and an operation voltage for the wireless headphone when the wireless headphone and the wireless audio player are connected to each other via a connector has been proposed (see, for example, Patent Document 3).

Many wireless headsets in the related art function as a normal wired earphone when they are connected to the body of an apparatus via a cable.

On the other hand, if a mobile apparatus receives an FM broadcast or a digital mobile broadcast such as a digital radio broadcast or a One-Seg broadcast, the configuration method of a receiving antenna is one of technical problems. In general, in order to obtain a sufficient antenna characteristic, an antenna having a length of λ/4 (λ is a usable wavelength) is required. In One-Seg broadcasting, an antenna length of about 15 cm is required. In digital radio broadcasting, an antenna length of about 37.5 cm is required. For example, it is difficult to receive such a broadcast using a whip antenna installed in a mobile telephone.

As one technique for providing an antenna circuit for a mobile terminal, an earphone antenna obtained by coupling an earphone cable to an antenna circuit and using the earphone cable as a wire antenna is known in the art. An earphone antenna of this type makes it possible to realize a broadcast receiving antenna having a relatively simple configuration and great portability and to install an antenna of an inconspicuous design in a mobile terminal without hindering efforts to meet needs for lighter weight, smaller size, and portability.

For example, an earphone microphone has been proposed in which a cord for connecting the earphone microphone and a mobile telephone to each other is formed by a parallel two-core cable composed of a pair of an acoustic signal line and a ground line and the whole of the earphone cable is used as antenna by using the ground line as an antenna (see, for example, Patent Document 4). Furthermore, an earphone antenna has been proposed which functions as a dipole antenna and can obtain a high gain over a wide band (see, for example, Patent Document 5).

As described previously, there are two representative patterns of listening to and viewing music data of audio data on a mobile terminal using a headset, that is, a pattern of outputting as sound from a headset music data reproduced on a mobile terminal or audio data obtained from a mobile telephone call and a pattern of receiving a digital mobile broadcast such as a digital radio broadcast or an One-Seg broadcast using a mobile terminal and outputting the digital radio broadcast from a headset as sound.

The former pattern can improve the usability of a headset for users of the headset by using a wireless communication method such as a Bluetooth communication method. However, the former pattern has a problem about the charging of the headset and does not take the latter pattern of receiving a digital mobile broadcast into account.

Furthermore, the latter pattern has no problem about the supply of an operation voltage to a headset and the charging operation of a battery, since an earphone antenna is connected to the body of a mobile terminal via a cable. However, since the cable is always connected to the headset during use of the headset, the headset is inconvenient for users.

Patent Document 1: Japanese Unexamined Patent Application Publication No. 2005-328118
Patent Document 2: Japanese Patent No. 3762373
Patent Document 3: Japanese Unexamined Patent Application Publication No. 2006-74384
Patent Document 4: Japanese Unexamined Patent Application Publication No. 2005-354275
Patent Document 5: Japanese Unexamined Patent Application Publication No. 2005-333613

### Disclosure of Invention

### Technical Problem

It is an object of the present invention to provide an excellent relay apparatus that has a radio frequency communication function, operates as a relay unit disposed between a mobile terminal such as a mobile telephone that is a source of music data or audio data and an earphone for outputting sound, can preferably wirelessly transmit/receive music data or audio data to/from the mobile terminal, and can preferably transmit an operation signal to the mobile terminal.

It is another object of the present invention to provide an excellent relay apparatus that is disposed as a relay unit between a mobile terminal capable of receiving a digital mobile broadcast such as a digital radio broadcast or a One-Seg broadcast and an earphone for outputting sound and can provide an antenna function for the mobile terminal when the mobile terminal receives a digital mobile broadcast.

### Technical Solution

The present invention has been developed in view of the above-described problems, and provides a relay unit disposed between an information apparatus for supplying audio data and an earphone for outputting an audio signal. The relay unit is characterized by comprising: a radio frequency communicating means for wirelessly connecting the information apparatus and the relay unit to each other; a connector to which a connection cord for connecting the information apparatus and the relay unit to each other in a wired manner is attached; an earphone jack to which the earphone is attached; and a second switching means for outputting as sound from the earphone the audio data that is supplied from the information apparatus through a wireless connection between the information apparatus and the relay unit via the radio frequency communicating means or a wired connection between the information apparatus and the relay unit via the connection cord attached to the connector.

A mobile terminal usage pattern of listening to music data using a headset is general. With the current expansion of services for mobile terminals, for example, digital mobile broadcasting, the number of mobile terminal usage patterns using a headset is thought to be further increased.

The connection between a mobile terminal and a headset via a cable is inconvenience for users. Accordingly, a system for wirelessly connecting a terminal such as a wireless audio player and a headset to each other has been developed, and is widely used. However, since a headset unit having a radio frequency function is driven by a battery, it is required to charge or replace the battery.

On the other hand, if a mobile apparatus receives an FM broadcast or a digital mobile broadcast such as a digital radio broadcast or a One-Seg broadcast, it is difficult to receive such a broadcast using a whip antenna installed in a mobile telephone. In this case, the configuration method of a receiving antenna is one of technical problems. An earphone antenna obtained by coupling an earphone cable to an antenna circuit and using the earphone cable as a wire antenna is known in the art.

A relay unit according to the present invention has a function of wirelessly connecting it to the information apparatus and a function of connecting it to the information apparatus in a wired manner, and can select a method of connecting it to the information apparatus in accordance with a situation of a user of the information apparatus such as a mobile telephone.

A relay unit according to the present invention includes the second switching means for outputting as sound from the earphone the audio data that is supplied from the information apparatus through a wireless connection between the information apparatus and the relay unit via the radio frequency communicating means or a wired connection between the information apparatus and the relay unit via the connection cord attached to the connector. That is, a headset is attached to the relay unit via the earphone jack, and the relay unit and the information apparatus are connectable to each other through radio frequency communication such as Bluetooth communication and wired communication.

When a user listens to music data reproduced on the information apparatus or audio data obtained from a mobile telephone voice call on the information apparatus, the relay unit can perform radio frequency communication with the information apparatus and can be used as a wireless headset.

On the other hand, when the information apparatus receives a digital mobile broadcast such as a One-Seg broadcast, the relay unit is connected to the information apparatus using the connection cord that also operates as an antenna for receiving the digital mobile broadcast. Here, the connection cord has a multicore configuration including a plurality of signal lines, and is configured as a shielded cable in which each of the plurality of signal lines is covered with an outer sheath formed by a braided shield formed by braiding annealed copper wires. It is possible to form an antenna using a length of the outer sheath formed by the braided shield and a ground of a body of the information apparatus. Then, the information apparatus decodes a broadcast signal received by such an antenna cable so as to obtain music data or audio data and outputs the music data or audio data to the earphone via the antenna cable and the relay unit. By using the connection cord as an antenna, an antenna length appropriate for reception of a digital mobile broadcast can be obtained and it is not required to relay on a whip antenna installed in a mobile telephone.

A relay unit according to the present invention may include a remote controller for remotely operating the information apparatus. In this case, the third switching means outputs an operation signal obtained from a user operation of the remote controller to the information apparatus through the wireless connection between the information apparatus and the relay unit via the radio frequency communicating means or the wired connection between the information apparatus and the relay unit via the connection cord attached to the connector.

A relay unit according to the present invention may include a microphone for picking up voice of a user for a voice call or a voice recording. In this case, the first switching means outputs an audio signal picked up by the microphone to the information apparatus through the wireless connection between the information apparatus and the relay unit via the radio frequency communicating means or the wired connection between the information apparatus and the relay unit via the connection cord attached to the connector.

A relay unit according to the present invention is driven by a battery, and further includes a rechargeable battery for supplying an operation voltage and a battery charging function unit for charging the battery. Then, the battery charging function unit is turned off when the connection cord connected to the information apparatus is removed from the connector. On the other hand, the battery charging function unit is turned on when the connection cord connected to the information apparatus is attached to the connector, so that the battery can be charged using a part of an operation voltage for the information apparatus.

Furthermore, while the connection cord connected to the information apparatus is attached to the connector, the relay unit is not required to perform radio frequency communication with the information apparatus. Accordingly, when the connection cord is removed from the connector, the radio frequency communicating means is turned on. By turning off at least a part of the radio frequency communicating means when the connection cord connected to the information apparatus is attached to the connector, the lower power consumption of the relay unit can be achieved.

Thus, a relay unit according to the present invention can form a digital mobile broadcast receiving antenna with an earphone. On the other hand, since the relay unit can be removed from a mobile terminal, it is possible to remove the relay unit from the mobile terminal as appropriate and use the relay unit as a wireless headset when music data is reproduced and output or a sound data is output during a call. The wireless connection between the mobile terminal and the relay unit can remove user's inconvenience.

### Advantageous Effects

According to the present invention, there can be provided an excellent relay apparatus that has a radio frequency communication function, operates as a relay unit disposed between a mobile terminal such as a mobile telephone that is a source of music data or audio data and an earphone for outputting sound, and is capable of preferably wirelessly transmitting/receiving music data or audio data to/from the mobile terminal and preferably transmitting an operation signal to the mobile terminal.

Furthermore, according to the present invention, there can be provided an excellent relay apparatus that is disposed between a mobile terminal capable of receiving a digital mobile broadcast such as a digital radio broadcast or a One-Seg broadcast and is capable of providing an antenna function when the mobile terminal receives a digital mobile broadcast.

A relay unit according to the present invention can be removed from a mobile terminal using a connection cord having an antenna function. Accordingly, at the time of listening to and viewing an FM broadcast or a digital mobile broadcast that is difficult to receive using an antenna installed in a mobile telephone, a headset may be connected to the mobile telephone in a wired manner. On the other hand, at the time of listening to music data recorded in the mobile terminal, it is possible to wirelessly transmit music data to the headset. Thus, a connection method can be selected in accordance with a user's situation. Furthermore, if a battery for the headset becomes exhausted or there is no power source, the headset can function as a normal earphone by being connected to the mobile terminal using a connection cord.

Other objects, characteristics, and advantages of the present invention will become apparent from more detailed descriptions based on the following embodiments of the present invention and the accompanying drawings.

### Brief Description of Drawings

[Fig. 1] Fig. 1A is a diagram schematically illustrating the configuration of a wireless communication system according to an embodiment of the present invention.
[Fig. 1B] Fig. 1B is a diagram illustrating a wired connection between a mobile telephone 8 and a relay unit 1 via a connection cord 3.
[Fig. 2A] Fig. 2A is a diagram illustrating the functional configuration of the relay unit 1 when a music data reproduction mode is set at the time of wireless connection.
[Fig. 2B] Fig. 2B is a diagram illustrating the functional configuration of the relay unit 1 when a voice call mode is set at the time of wireless connection.
[Fig. 3A] Fig. 3A is a diagram illustrating the functional configuration of the relay unit 1 when the music data reproduction mode is set at the time of wired connection.
[Fig. 3B] Fig. 3B is a diagram illustrating the functional configuration of the relay unit 1 when the voice call mode is set at the time of wired connection.
[Fig. 4] Fig. 4 is a diagram illustrating the internal configuration of the connection cord 3 for connecting the mobile telephone 8 and the relay unit 1 to each other in a wired manner.
[Fig. 5] Fig. 5 is a diagram illustrating the connection between the mobile telephone 8 and each functional module included in the relay unit 1 via the connection cord 3. Explanation of Reference Numerals

1 relay unit, 3 connection cord, 6 earphone, 8 mobile telephone, 10 earphone jack, 11 Bluetooth communication module, 12 antenna, 13 connector, 14 operation selection switch, 15 remote controller, 16 battery charging function unit, 17 signal processing unit, 19 microphone, 21 first switch, 22 second switch, 23 third switch

### Best Modes for Carrying Out the Invention

Embodiments of the present invention will be described in detail below with reference to the accompanying drawings.

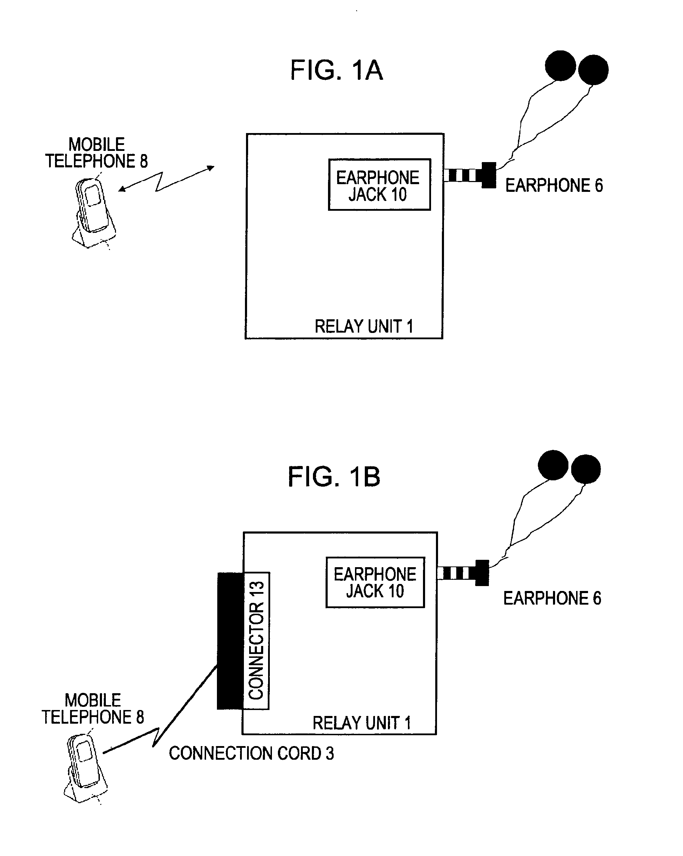

Fig. 1A schematically illustrates the configuration of a wireless communication system according to an embodiment or the present invention.

The system illustrated in the drawing includes a mobile telephone 8, an earphone 6, and a relay unit 1 disposed between the mobile telephone 8 and the earphone 6. The earphone 6 is removably attached to the relay unit 1 via an earphone jack 10. However, it is to be understood that a headset into which the relay unit and the earphone 6 are integrated may be used.

The mobile telephone 8 is assumed to have not only a function of making a call via a mobile telephone network but also a function of storing, reproducing, and outputting music data and a function of receiving an FM broadcast and a digital mobile broadcast such as a digital radio broadcast or a One-Seg broadcast. However, since this type of mobile telephone is generally used, the description thereof will be omitted in this specification.

Both of the mobile telephone 8 and the relay unit 1 have a Bluetooth communication function. For example, the mobile telephone 8 forms a piconet as a master. On the other hand, the relay unit 1 that operates as a slave is included in the piconet. In this embodiment, it is possible to transmit music data and audio data from the mobile telephone 8 to the relay unit 1 through Bluetooth communication and transmit an operation signal for instructing the mobile telephone 8 to reproduce/stop the music data from the relay unit 1 to the mobile telephone 8 through Bluetooth communication.

The mobile telephone 8 and the relay unit 1 can be connected to each other using a wireless LAN function such as IEEE802.11 instead of Bluetooth communication.

Furthermore, as illustrated in Fig. 1B, the mobile telephone 8 and the relay unit 1 can be connected to each other in a wired manner via a connection cord 3 that is removable from a connector 13.

The connection cord 3 has a multicore configuration including a plurality of signal lines such as a signal used to receive or output sound, a power line used to supply power to a battery included in the relay unit 1, a remote controller signal line used to transmit an operation signal in accordance with a user's operation on the relay unit 1, and a ground signal line, and is configured as a shielded cable covered with an outer sheath that is a braided shield formed by braiding annealed copper wires. Furthermore, by forming an antenna using the length of the outer sheath that is a braided shield and the ground of the body of the mobile telephone 8, the shielded cable can operate as an antenna cable. The configuration of the connection cord 3 will be described in detail later.

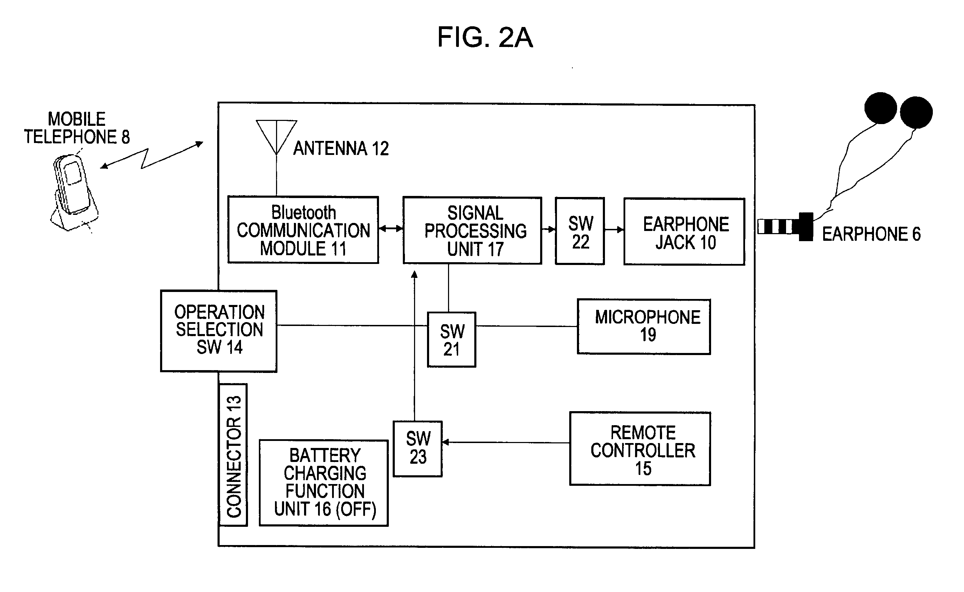

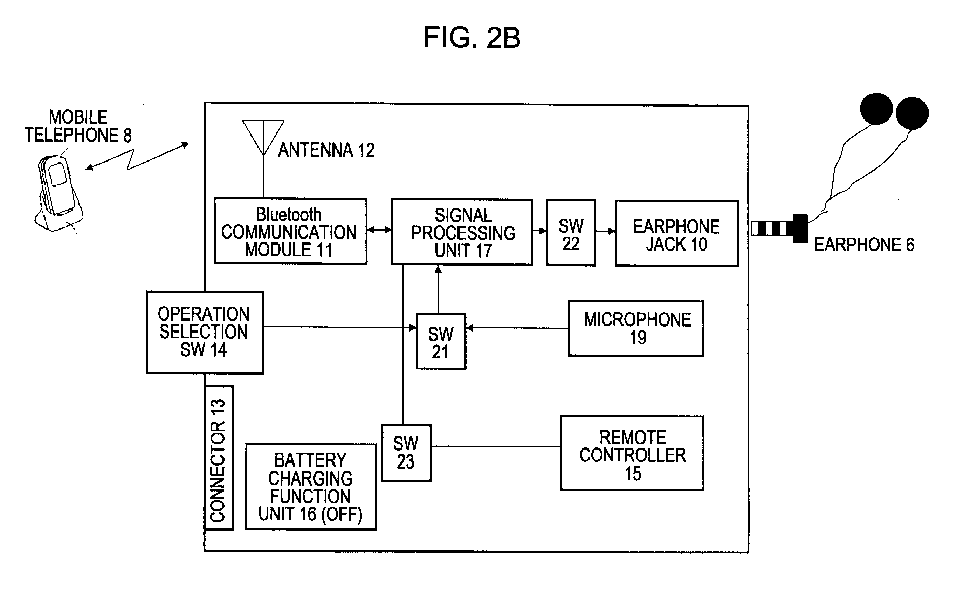

Fig. 2 illustrates the internal configuration of the relay unit 1. In the drawing, the configuration of the relay unit 1 when the relay unit 1 is connected to the mobile telephone 8 through Bluetooth communication is functionally illustrated. However, in order to prevent the drawing from being complicated, the illustration of wiring between functional modules is omitted as appropriate.

The relay unit 1 includes a Bluetooth communication module 11 and a Bluetooth communication antenna 12 which are used for a wireless connection between the relay unit 1 and the mobile telephone 8, and a connector 13 to which the connection cord 3 used for a wired connection between the relay unit 1 and the mobile telephone 8 is attached. The functional configuration of the relay unit 1 when the relay unit 1 is connected to the mobile telephone 8 in a wired manner will be described in detail later. Here, the functional configuration of the relay unit 1 when the relay unit 1 is wirelessly connected to the mobile telephone 8 will be described.

At the time of wireless connection, the relay unit 1 has two operation modes, that is, a music data reproduction mode in which music data transmitted from the mobile telephone 8 through Bluetooth communication is reproduced and a voice call mode performed when the mobile telephone 8 makes or receives a call. If a user operates an operation selection switch 14, connection switching among three switches 21 to 23 included in the relay unit 1 is performed and an operation mode is changed.

In both of the music data reproduction mode and the voice call mode, a user can remotely operate the mobile telephone 8 using a remote controller 15. Furthermore, a circuit included in the relay unit 1 is driven by a battery (not illustrated). The relay unit 1 also includes a battery charging function unit 16 for charging the battery. The battery charging function unit 16 is turned off at the time of wireless connection.

Fig. 2A illustrates the functional configuration of the relay unit 1 when the music data reproduction mode is set at the time of wireless connection.

The mobile telephone 8 codes music data read out from a recording medium (not illustrated) as appropriate, adds a predetermined header to the music data, performs modulation processing upon the music data, upconverts the music data into a desired wireless signal, and outputs the wireless signal into the air. On the other hand, on the side of the relay unit 1, the Bluetooth communication module 11 receives the wireless signal via the antenna 12, performs appropriate demodulation processing and appropriate decoding processing upon the wireless signal, and the signal processing unit 17 generates a music reproduction signal and outputs the music reproduction signal as sound from the earphone 6 via the second switch 22 and the earphone jack 10.

Furthermore, in the music data reproduction mode at the time of wireless connection, it is possible to provide an instruction for controlling a sound volume, an instruction for starting and stopping the reproduction of music, a fast forward instruction, and a rewind instruction using the remote controller 15. An operation signal input from the remote controller 15 by a user is input into a signal processing unit 17 via the third switch 23, is subjected to coding, the addition of a predetermined header, and modulation processing in the Bluetooth communication module 11, and is then transmitted from the antenna 12 to the mobile telephone 8.

Fig. 2B illustrates the functional configuration of the relay unit 1 when the voice call mode is set at the time of wireless connection.

The mobile telephone 8 codes audio data output from a communication partner as appropriate, adds a predetermined header to the audio data, performs modulation processing upon the audio data, upconverts the audio data into a desired wireless signal, and outputs the wireless signal into the air. On the other hand, on the side of the relay unit 1, the Bluetooth communication module 11 receives the wireless signal via the antenna 12 and performs appropriate demodulation processing and appropriate decoding processing upon the wireless signal, and the signal processing unit 17 generates an audio signal and outputs the audio signal as sound from the earphone 6 via the second switch 22 and the earphone jack 10.

Furthermore, if the microphone 19 picks up sound output from a user during a voice call, the sound is input into the signal processing unit 17 via the first switch 21 and is subjected to signal processing. Subsequently, the Bluetooth communication module 11 codes the sound, adds a predetermined header to the sound, performs modulation processing upon the sound, and transmits the sound from the antenna 12 to the mobile telephone 8.

Still furthermore, in the voice call mode at the time of wireless connection, it is possible to provide an instruction for controlling a sound volume, etc. using the remote controller 15. An operation signal input from the remote controller 15 by a user is input into the signal processing unit 17 via the third switch 23, is subjected to coding, the addition of a predetermined header, and modulation processing in the Bluetooth communication module 11, and is then transmitted from the antenna 12 to the mobile telephone 8.

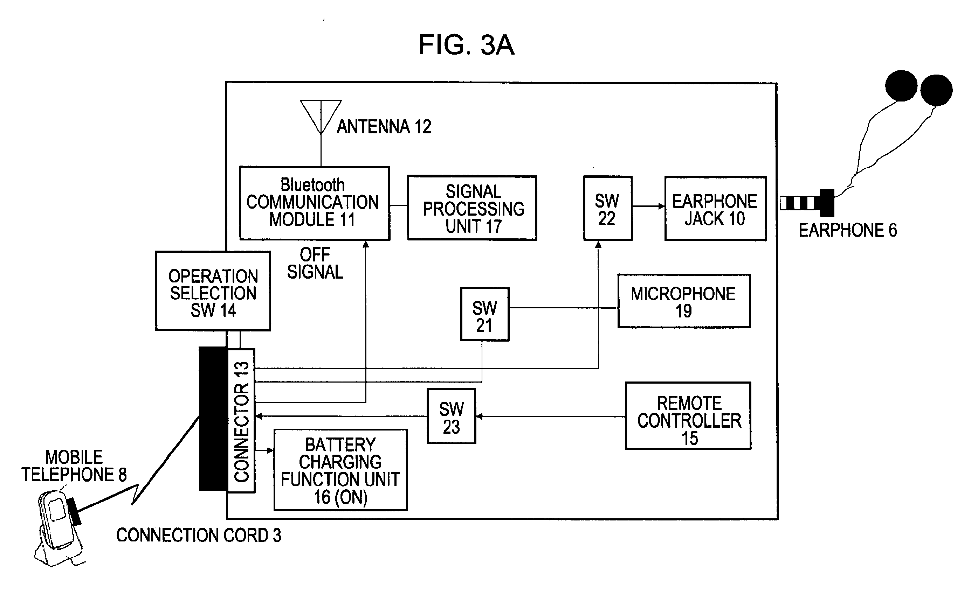

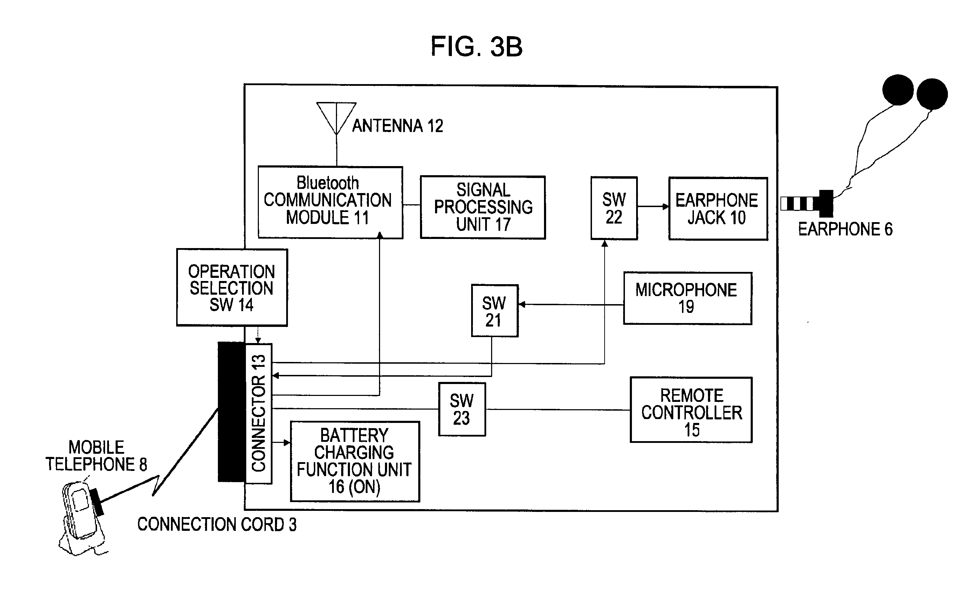

Fig. 3 functionally illustrates the internal configuration of the relay unit 1 when the relay unit 1 is connected to the mobile telephone 8 in a wired manner. However, in order to prevent the drawing from being complicated, the illustration of wiring between functional modules is omitted as appropriate.

The connection cord 3 used for the wired connection between the relay unit 1 and the mobile telephone 8 is attached to the connector 13. At the time of wired connection, the relay unit 1 similarly has two operation modes, that is, the music data reproduction mode in which music data transmitted via the connection cord 3 is reproduced and the voice call mode performed when the mobile telephone 8 makes or receives a call. If a user operates the operation selection switch 14, connection switching among the three switches 21 to 23 included in the relay unit 1 is performed and an operation mode is changed.

In both of the music data reproduction mode and the voice call mode, a user can remotely operate the mobile telephone 8 using the remote controller 15. A circuit included in the relay unit 1 is driven by a battery (not illustrated) as described previously. However, at the time of wired connection, since it is possible to charge the battery using a part of an operation voltage for the mobile telephone 8, the battery charging function unit 16 is turned on. Furthermore, at the time of wired connection, since the Bluetooth communication function is not required, an off signal for turning off the Bluetooth communication module 11 is generated when it is detected that the connection cord 3 has been connected to the connector 13. This leads to lower power consumption.

Fig. 3A illustrates the functional configuration of the relay unit 1 when the music data reproduction mode is set at the time of wired connection.

The mobile telephone 8 generates an audio reproduction signal from music data read out from a recording medium (not illustrated) and transmits the audio reproduction signal to the connection cord 3. On the other hand, the relay unit 1 outputs sound from the earphone 6 via the connector 13, the second switch 22, and the earphone jack 10.

Furthermore, in the music data reproduction mode at the time of wired connection, it is possible to provide an instruction for controlling a sound volume, an instruction for starting and stopping the reproduction of music, a fast forward instruction, and a rewind instruction using the remote controller 15. An operation signal input from the remote controller 15 by a user is transmitted to the mobile telephone 8 via the third switch 23, the connector 13, and the connection cord 3.

Fig. 3B illustrates the functional configuration of the relay unit 1 when the voice call mode is set at the time of wired connection.

The mobile telephone 8 transmits the audio data of a communication partner to the connection cord 3. On the other hand, the relay unit 1 outputs sound from the earphone 6 via the connector 13, the second switch 22, and the earphone jack 10.

Furthermore, if the microphone 19 picks up sound output from a user during a voice call, the sound is transmitted to the mobile telephone 8 via the third switch 23, the connector 13, and the connection cord 3.

Still furthermore, in the voice call mode at the time of wired connection, it is possible to provide an instruction for controlling sound volume, etc. using the remote controller 15. An operation signal input from the remote controller 15 by a user is transmitted to the mobile telephone 8 via the third switch 23, the connector 13, and the connection cord 3.

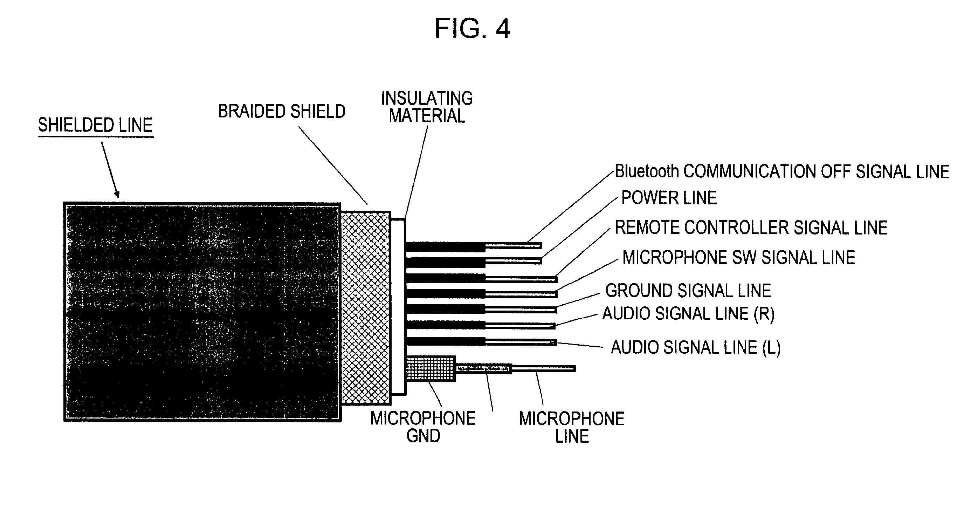

Fig. 4 illustrates the internal configuration of the connection cord 3 for connecting the mobile telephone 8 and the relay unit 1 to each other in a wired manner.

The connection cord 3 illustrated in the drawing has a multicore configuration including a plurality of signal lines such as right and left audio signal lines (R/L) used to receive or output sound, a power line used to supply power to a battery included in the relay unit 1, a remote controller signal line used to transmit an operation signal in accordance with a user's operation on the relay unit 1, a ground signal line, a call switching line, a microphone switching signal line, and a signal line used to turn off the Bluetooth communication module 11 when the connection cord 3 is attached, and is configured as a shielded cable covered with an outer sheath that is a braided shield formed by braiding annealed copper wires.

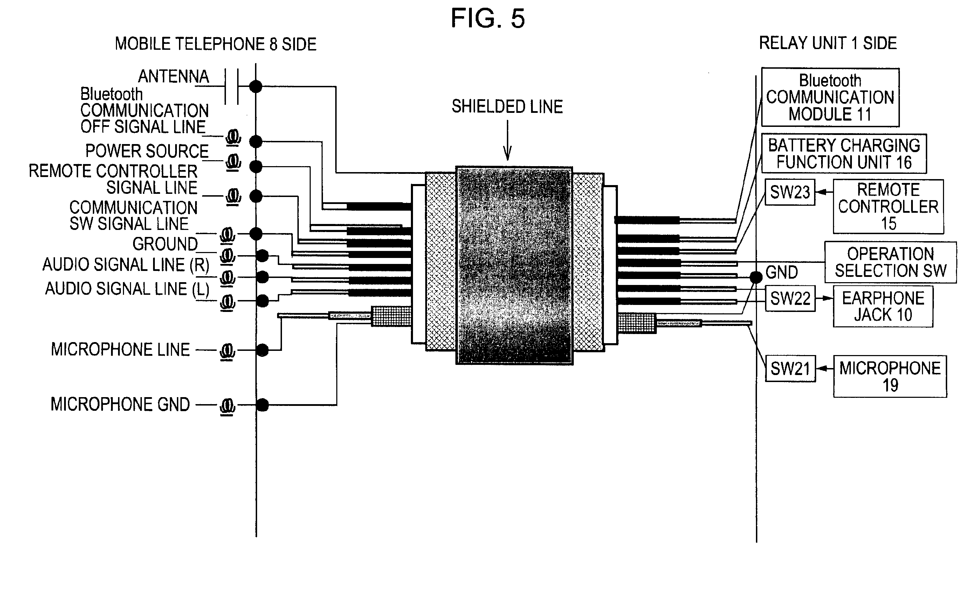

Fig. 5 illustrates the connection between the mobile telephone 8 and each functional module included in the relay unit 1 via the connection cord 3.

A high-frequency choke such as a ferrite bead (FB) is loaded on each signal line in the mobile telephone 8. Ferrite beads are widely known as an anti-EMI (electromagnetic interference) component for reducing a signal that is a source of radiation noise using a frequency characteristic of an impedance component of a ferrite material. The ferrite material is a complex compound of ferrite and metal. The higher the frequency, the larger the impedance component of the ferrite material.

By forming an antenna using the length of the outer sheath of the connection cord 3 which is a braided shield and the ground of the body of the mobile telephone 8, a shielded cable can operate as an antenna cable. A capacitor is loaded on a transmission line for an antenna reception signal received from the outer sheath braided shield so as to achieve radio-frequency coupling.

In order to obtain a sufficient antenna characteristic, an antenna having a length of λ/4 (λ is a bridge wavelength) is required. In One-Seg broadcasting, an antenna length of about 15 cm is required. In digital radio broadcasting, an antenna length of about 37.5 cm is required. It is difficult to receive a digital mobile broadcast using a whip antenna (not illustrated) installed in the mobile telephone 8. However, by using the connection cord 3 as an antenna, a sufficient antenna length can be obtained. The fact that the outer sheath braided shield of a shielded cable is used as antenna is disclosed in, for example, Japanese Patent Application No. 2006-109603 that is assigned to the same assignee as the present application.

Although not illustrated, the relay unit 1 may use a winding-up connection cord as the connection cord 3. When music reproduction is performed or a voice call is made at the time of wireless connection between the mobile telephone 8 and the relay unit 1, the connection cord 3 is wound into the relay unit 1. On the other hand, when the mobile telephone 8 receives a digital mobile broadcast or when music reproduction is performed or a voice call is made at the time of wired connection between the mobile telephone 8 and the relay unit 1, an adequate amount of the connection cord 3 is pulled out.

### Industrial Applicability

The present invention has been described in detail with reference to specific embodiments. However, it is obvious that modifications and substitutions of the embodiments can be made by those skilled in the art without departing from the scope of the present invention.

While the above-described embodiments have been described herein in the context of a relay unit connected to a mobile telephone, embodiments of the present invention are not limited thereto. An embodiment of the present invention may provide various types of mobile terminals or information apparatuses having a function of reproducing and outputting an audio signal and receiving a digital mobile broadcast such as a digital radio broadcast or a One-Seg broadcast.

That is, the present invention has been disclosed in conjunction with the embodiments, and the details of this specification should not be restrictively interpreted. The scope of the present invention should be interpreted in consideration of the scope of the appended claims.

## Claims

1. A relay unit disposed between an information apparatus for supplying audio data and an earphone for outputting an audio signal, the relay unit **characterized by** comprising:
a radio frequency communicating means for wirelessly connecting the information apparatus and the relay unit to each other;
a connector to which a connection cord for connecting the information apparatus and the relay unit to each other in a wired manner is attached;
an earphone jack to which the earphone is attached; and
a second switching means for outputting as sound from the earphone the audio data that is supplied from the information apparatus through a wireless connection between the information apparatus and the relay unit via the radio frequency communicating means or a wired connection between the information apparatus and the relay unit via the connection cord attached to the connector.

2. The relay unit according to Claim 1, **characterized by** further comprising,
a remote controller for remotely operating the information apparatus, and
a third switching means for outputting an operation signal obtained from a user operation of the remote controller to the information apparatus through the wireless connection between the information apparatus and the relay unit via the radio frequency communicating means or the wired connection between the information apparatus and the relay unit via the connection cord attached to the connector.

3. The relay unit according to Claim 1, **characterized by** further comprising,
a microphone, and
a first switching means for outputting an audio signal picked up by the microphone to the information apparatus through the wireless connection between the information apparatus and the relay unit via the radio frequency communicating means or the wired connection between the information apparatus and the relay unit via the connection cord attached to the connector.

4. The relay unit according to Claim 1, **characterized in that,** the information apparatus is a mobile telephone having a music data reproduction function, and
the relay unit further includes an operation switching means for providing an instruction for switching between an operation for outputting sound of music data reproduced in the mobile telephone and an operation for making a call.

5. The relay unit according to Claim 1, **characterized in that,** the relay unit further includes a rechargeable battery for supplying an operation voltage and a battery charging function unit for charging the battery, and
the battery charging function unit is turned off when the connection cord connected to the information apparatus is removed from the connector, and is turned on when the connection cord connected to the information apparatus is attached to the connector.

6. The relay unit according to Claim 1, **characterized in that,** at least a part of the radio frequency communicating means is turned off when the connection cord connected to the information apparatus is attached to the connector, and
the radio frequency communicating means is turned on when the connection cord connected to the information apparatus is removed from the connector.

7. The relay unit according to Claim 1, **characterized in that,** the information apparatus has a digital mobile broadcast receiving function,
the connection cord has a multicore configuration including a plurality of signal lines, and is configured as a shielded cable in which each of the plurality of signal lines is covered with an outer sheath formed by a braided shield formed by braiding annealed copper wires, and
an antenna is formed using a length of the outer sheath formed by the braided shield and a ground of a body of the information apparatus.

8. The relay unit according to Claim 1, **characterized in that** the radio frequency communicating means has a Bluetooth communication function or a wireless LAN function.

## Amended claims

### Amended claims under Art. 19.1 PCT

**1.** (After amendment) A relay unit disposed between an information apparatus for supplying audio data and an earphone for outputting an audio signal, the relay unit **characterized in that:**
it comprises,
a radio frequency communicating means for wirelessly connecting the information apparatus and the relay unit to each other,
a connector to which a connection cord for connecting the information apparatus and the relay unit to each other in a wired manner is attached,
an earphone jack to which the earphone is attached, and
a second switching means for outputting as sound from the earphone the audio data that is supplied from the information apparatus through a wireless connection between the information apparatus and the relay unit via the radio frequency communicating means or a wired connection between the information apparatus and the relay unit via the connection cord attached to the connector;
the connection cord has a multicore configuration including a plurality of signal lines, and is configured as a shielded cable in which each of the plurality of signal lines is covered with an outer sheath formed by a braided shield formed by braiding annealed copper wires; and
an antenna is formed using a length of the outer sheath formed by the braided shield and a ground of a body of the information apparatus.

**2.** The relay unit according to Claim 1, **characterized by** further comprising,
a remote controller for remotely operating the information apparatus, and
a third switching means for outputting an operation signal obtained from a user operation of the remote controller to the information apparatus through the wireless connection between the information apparatus and the relay unit via the radio frequency communicating means or the wired connection between the information apparatus and the relay unit via the connection cord attached to the connector.

**3.** The relay unit according to Claim 1, **characterized by** further comprising,
a microphone, and
a first switching means for outputting an audio signal picked up by the microphone to the information apparatus through the wireless connection between the information apparatus and the relay unit via the radio frequency communicating means or the wired connection between the information apparatus and the relay unit via the connection cord attached to the connector.

**4.** The relay unit according to Claim 1, **characterized in that,** the information apparatus is a mobile telephone having a music data reproduction function, and
the relay unit further includes an operation switching means for providing an instruction for switching between an operation for outputting sound of music data reproduced in the mobile telephone and an operation for making a call.

**5.** The relay unit according to Claim 1, **characterized in that,** the relay unit further includes a rechargeable battery for supplying an operation voltage and a battery charging function unit for charging the battery, and
the battery charging function unit is turned off when the connection cord connected to the information apparatus is removed from the connector, and is turned on when the connection cord connected to the information apparatus is attached to the connector.

**6.** The relay unit according to Claim 1, **characterized in that,** at least a part of the radio frequency communicating means is turned off when the connection cord connected to the information apparatus is attached to the connector, and
the radio frequency communicating means is turned on when the connection cord connected to the information apparatus is removed from the connector.

**7.** (After amendment) The relay unit according to Claim 1, **characterized in that** the information apparatus has a digital mobile broadcast receiving function.

**8.** The relay unit according to Claim 1, **characterized in that** the radio frequency communicating means has a Bluetooth communication function or a wireless LAN function.

Statement under Art. 19.1 PCT
Claim 1 makes it clear that the connection cord has a multicore configuration including a plurality of signal lines and is configured as a shielded cable in which each of the plurality of signal lines is covered with an outer sheath formed by a braided shield formed by braiding annealed copper wires, and an antenna is formed using a length of the outer sheath formed by the braided shield and a ground of a body of the information apparatus. Accordingly, the words "the connection cord has a multicore configuration including a plurality of signal lines and is configured as a shielded cable in which each of the plurality of signal lines is covered with an outer sheath formed by a braided shield formed by braiding annealed copper wires, and an antenna is formed using a length of the outer sheath formed by the braided shield and a ground of a body of the information apparatus" are deleted from Claim 7.
